# DEMANDE DE BREVET EUROPEEN

(11) **EP 1 126 020 A1**
(43) Date de publication de la demande: **22.08.2001**
(21) Numéro de dépôt: 01400402.2
(22) Date de dépôt: 15.02.2001
(51) Int. Cl.: C12G 1/06

(54) **Portillon automatique**

(30) Priorité: 17.02.2000 FR 0001936
(71) Demandeur: Oeno Concept, 51334 Epernay (FR)
(72) Inventeur: Gerardin, Stéphane, 51150 Juvigny (FR)
(74) Mandataire: Viard, Jean

(57) **Abrégé**

- Portillon, notamment pour caisse de remuage, comprenant deux grilles réunies par des tiges, des moyens élastiques (3,7) étant interposés entre les deux grilles (1,4) pour simplifier la fermeture et de l'ouverture d'une caisse par un portillon.

## Description

La présente invention a pour objet un portillon, destiné en particulier, mais non exclusivement, à obturer temporairement une face d'une caisse ou container contenant un grand nombre de bouteilles lors du traitement du vin selon la méthode champenoise, notamment lors du remuage.

Le remuage consiste à faire passer progressivement les levures mortes, déposées initialement contre la surface latérale des bouteilles, dans le goulot de celles-ci en vue de leur éjection. Ce mouvement, précédemment effectué sur des pupitres est maintenant effectué dans des remueurs, les bouteilles étant regroupées dans des caisses.

Une caisse est introduite dans le remueur les bouteilles étant en position horizontale ou « sur lattes ». Après le remuage, elles se retrouvent en position verticale ou « sur pointes ». Il est alors nécessaire de les décharger en vue de leur faire subir le dégorgement. Pour ce faire, il est souhaitable de pouvoir accéder latéralement, lorsque les bouteilles sont sur pointes, à l'intérieur de la caisse pour en extraire les bouteilles par lits.

Dans les caisses actuellement dans le commerce, l'une des faces latérales de la caisse parallélipipèdique contenant, par exemple, 504 bouteilles, est constituée par un portillon. Un portillon est un ensemble de deux grilles, respectivement inférieure et supérieure, qui peuvent être assemblées entre elles et sur les montants des faces adjacentes. Il est ainsi possible de retirer la grille supérieure lors du début du déchargement, puis la grille inférieure.

Mais, bien entendu, la fixation desdites grilles doit être rigide pour résister aux efforts pouvant être appliqués sur cette face. Actuellement, le verrouillage du portillon sur la caisse est obtenu soit par des leviers à came, ce qui est mécaniquement compliqué, soit par vissage ce qui demande une clé appropriée.

Un premier objet de l'invention est de pallier cet inconvénient et de proposer un portillon à verrouillage automatique.

Selon l'invention, le portillon, notamment pour caisse de remuage, comprenant deux grilles réunies par des tiges , des tétons pénétrant des rainures ménagées dans la caisse et s'étendant selon des directions divergentes, est caractérisé en ce que des moyens élastiques sont interposés entre les deux grilles.

Ainsi, pour monter un portillon il suffit de presser les deux grilles l'une vers l'autre contre la force des moyens élastiques, tels que des vérins à ressort puis de relâcher celles-ci pour que la mise en place du portillon s'effectue automatiquement.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, une vue de face de la grille inférieure du portillon selon l'invention;
- la figure 2, une vue de face de la grille supérieure;
- les figures 3 et 4, des vues d'une face de la caisse perpendiculaire à la face fermée par le portillon et du portillon en position d'insertion, ;
- les figures 5 et 6, la même face de caisse et le portillon en position verrouillée.

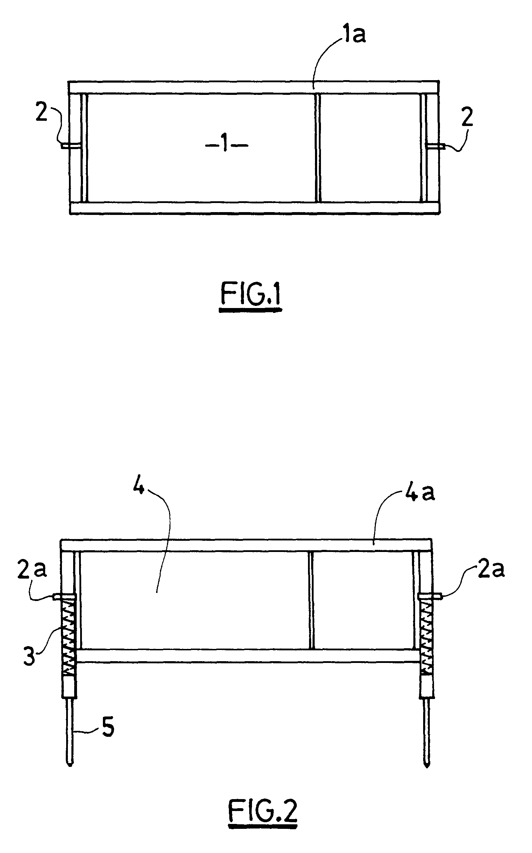

Sur l'ensemble des figures, les mêmes références désignent les mêmes éléments. Sur la figure 1, on voit que la grille inférieure se compose d'un cadre rectangulaire 1 dont les petits côtés présentent deux tétons en saillie 2. La surface interne au cadre est recouverte par un grillage (non représenté) à mailles rectangulaires destiné à retenir les bouteilles contenues dans la caisse.

Des tétons 2 a sont également présents dans le cadre 4 de la grille supérieure représentée sur la figure 2 qui inclût également un grillage (non représenté) dans sa surface interne. De part et d'autre du cadre 4 sont montés deux vérins 3 du type à ressort dont les tiges 5 sont en saillie et pénètrent, lors de l'assemblage du portillon dans des cavités du cadre profilé 1 de la grille inférieure. Les vérins 3, dont le corps est solidarisé du cadre 4 constituent le dispositif de serrage automatique selon l'invention.

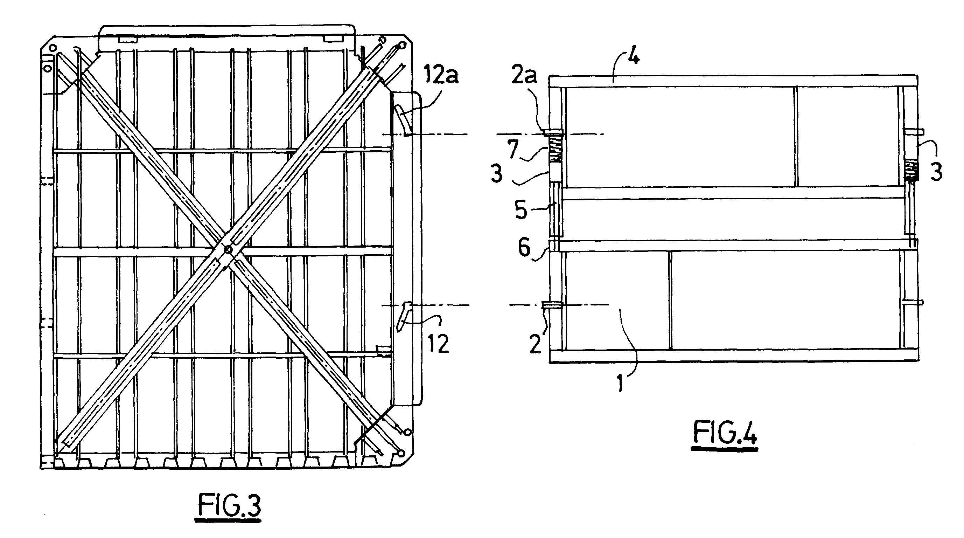

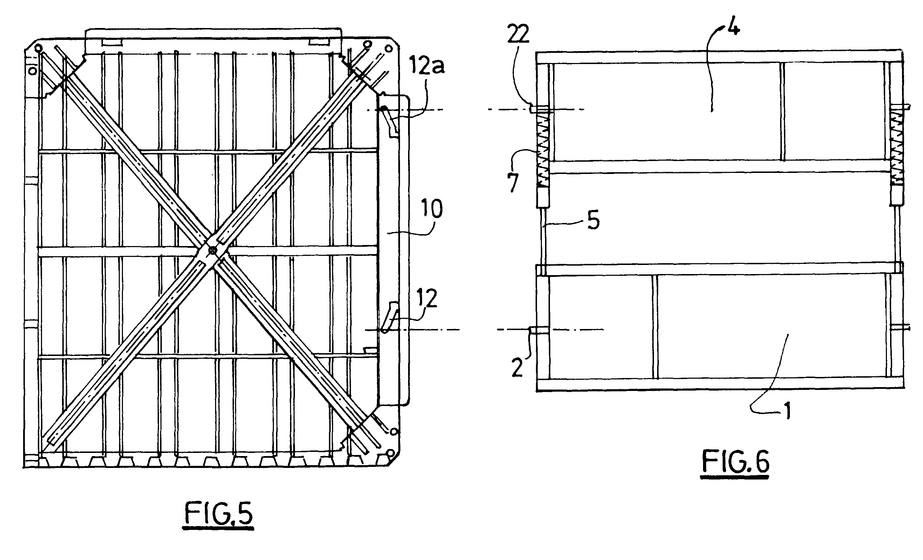

Comme cela apparaît sur les figures 3 et 5, la caisse de remuage en fil, dont une seule face est représentée sur ces figures, est connue et disponible dans le commerce. Elle ne sera pas décrite en détail. Sur la partie droite de ces figures, correspondant à un montant de la caisse, on distingue une plaque 10 présentant des rainures 12,12a dans lesquelles vont venir s'insérer respectivement les tétons 2 de la grille inférieure et 2a de la grille supérieure. Les tétons et les rainures sont connus dans les caisses actuelles. Bien entendu, les grilles 1 et 4 prennent appui sur les deux faces parallèles adjacentes de la caisse.

Le but de l'invention est de proposer un dispositif de verrouillage automatique des tétons 2,2a dans les rainures 12,12a, verrouillage qui exigeait, comme expliqué précédemment soit des outils, soit des dispositifs de serrage à came compliqués.

Le verrouillage automatique selon l'invention sera mieux compris par la description qui va suivre des figures 4 et 6. On retrouve sur ces figures les deux grilles inférieure et supérieure assemblées. Lors du montage, on introduit les tétons 2 dans le haut des rainures 12. Il est alors possible d'assembler sur la grille inférieure 1 la grille supérieure 4, cet assemblage étant guidé par la pénétration de l'extrémité avant des tiges 5 dans les cavités 6 de la grille 1. On presse alors sur le haut de la grille 4 ce qui écrase les ressorts 7 et diminue la distance entre les tétons 2 et 2a. Les tétons 2a peuvent ainsi être insérés dans les rainures inclinées 12a et se détendre, comme représenté sur la figure 6 dans celle-ci, les tétons 2 descendant dans les rainures 12. La force des ressorts 7 maintient les tétons 2 dans le fond des rainures.

L'ouverture du portillon par retrait de la grille 4 est simplement obtenue en appuyant sur le haut de la grille 4, ce qui comprime les ressorts 7 et abaisse les tétons 2a jusqu'à ce qu'ils arrivent en face de l'ouverture des rainures 12a, position à partir de laquelle un léger pivotement les dégage des dites rainures. La grille inférieure peut être en suite simplement soulevée.

Bien entendu, d'autres faces de la caisse et notamment la face opposée au fond de la caisse peuvent également être fermées par un portillon selon l'invention. Celle-ci peut être également mise en oeuvre chaque fois que l'on désire obturer temporairement une face d'un container ou analogue.

Il va de soi que de nombreuses variantes peuvent être apportées, notamment par substitution de moyens techniques équivalents, sans sortir pour cela du cadre de l'invention.

## Revendications

1. Portillon, notamment pour caisse de remuage, comprenant deux grilles (1,4) réunies par des tiges (5), des tétons (2,2a) pénétrant des rainures (12,12a) ménagées dans la caisse et s'étendant selon des directions divergentes, caractérisé en ce que des moyens élastiques (3,7) sont interposés entre les deux grilles.

2. Portillon selon la revendication 1, caractérisé en ce que les moyens élastiques sont constitués par des vérins à ressort (3,7).
